Europäisches Patentamt

European Patent Office

Office européen des brevets

(11) Publication number: **0 368 519**
**A2**

## (12) EUROPEAN PATENT APPLICATION

(21) Application number: **89311113.8**

(22) Date of filing: **27.10.89**

(51) Int. Cl.⁵: **F01P 7/14, F01P 11/00, F16L 55/027**

(30) Priority: **08.11.88 GB 8826158**

(43) Date of publication of application:
**16.05.90 Bulletin 90/20**

(84) Designated Contracting States:
**CH DE ES FR GB IT LI NL SE**

(71) Applicant: **Rolls-Royce Motor Cars Limited**
**Pyms Lane**
**Crewe Cheshire CW1 3PL(GB)**

(72) Inventor: **Driscoll, Clive John**
**183 Farren Road**
**Northfield Birmingham, B31 5HL(GB)**

(74) Representative: **Downey, William Gerrard et al**
**WILSON GUNN & ELLIS 41-51 Royal**
**Exchange Cross Street**
**Manchester M2 7BD(GB)**

(54) **A flow restrictor.**

㊼ A coolant system of an automobile engine incorporates a flow restrictor which under low speed conditions direct colant leaving the cylinder head towards the heater. The restrictor may be tubular comprising folds at one end or a disc having flaps which open to permit flow as pressure increases. The number and characteristics of the folds or flaps are chosen to give the desired pressure dependent response.

FIG. 5

EP 0 368 519 A2

## A FLOW RESTRICTOR

The present invention relates to a flow restrictor.

The restrictor is particularly, but not exclusively, applicable to certain coolant flow passages in an internal combustion engine. In such engines, under certain conditions, coolant flow through the engine may have a bias towards a non preferred route. Thus, the coolant flow returning to the thermostat housing from the cylinder head may be unnecessarily high whilst being insufficient through the heater.

According to one aspect of the present invention, there is provided a flow restrictor made of a flexible material comprising a through passage having a cross-sectional area which increases with increasing differential pressure thereacross.

According to another aspect of the present invention there is provided a coolant system for an internal combustion engine comprising a plurality of coolant flow paths and a flow restrictor disposed in one of the paths and a flow towards another of the paths under certain engine operating conditions.

The certain engine operating condition will usually be at low speeds. Flow is then biased towards the path through the heater and away from the theremostat housing by incorporating the restrictor in the outlet coolant passage from the head.

The restrictor may be moulded from rubber or synthetic plastics material. It will generally comprise a hollow cylinder designed with folds at one end which may open with increased pressure to permit increased flow therethrough. Alternatively, the restrictor may be of disc form with a plurality of flaps. The folds or flaps and the material may be varied as desired.

In order that the invention may be more clearly understood, one embodiment thereof will now be described, by way of example, with reference to the accompanying drawings, in which:-

Figure 1 is a diagram of an internal combustion engine cooling system,

Figure 2 is an explanatory coolant flow diagram,

Figure 3 is a diagrammatic exploded view of part of a flow passage incorporating a flow restrictor,

Figures 4 and 5 respectively show perspective views of the flow restrictor of figure 3 in the open and closed condition, and

Figure 6 is a front elevational view of an alternative to the restrictor of Figures 3,4 and 5.

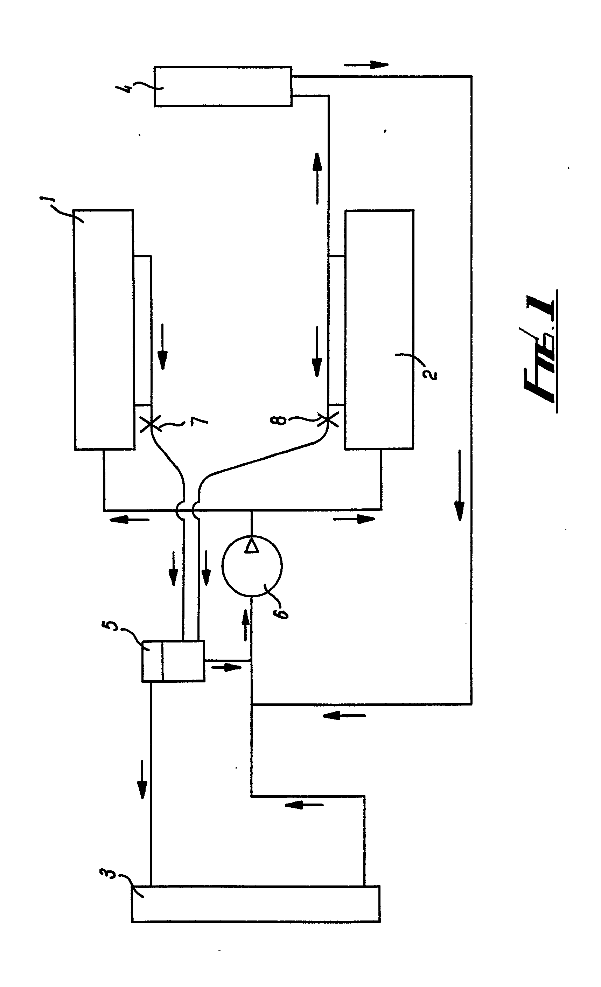

Referring to Figure 1, the internal combustion engine comprises cylinder heads 1 and 2 connected into a coolant system comprising a radiator 3, heater 4, thermostat 5 and water pump 6 connected together by coolant flow pipes. Arrows along these pipes indicate the direction of coolant flow in operation of the engine. Two flow restrictors 7 and 8 are disposed in the main coolant return pipes for a purpose to be described later. Without the flow restrictors, under certain, particularly low engine speed operating conditions, coolant flow takes the easier route and flows through the thermostat housing in preference to the usually more restricted route through the heater. This reduces heater output where it may be advantageous.

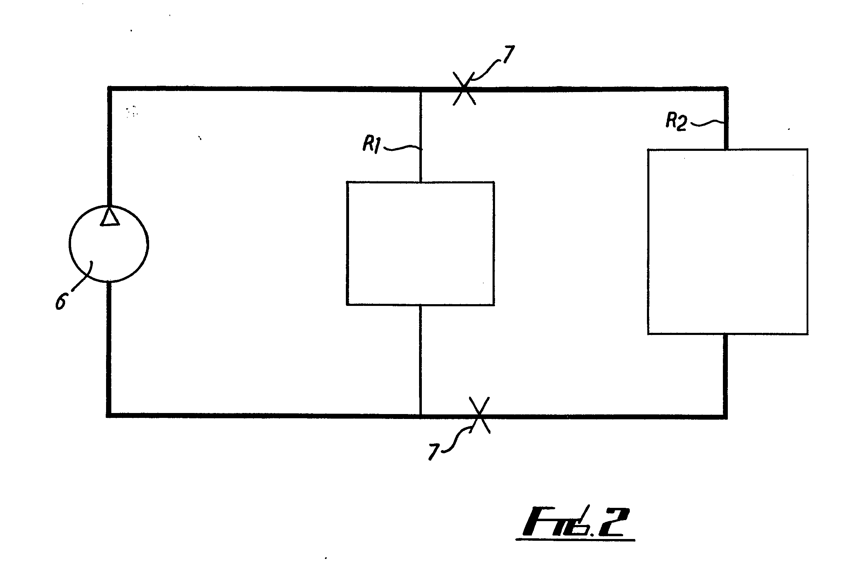

Figure 2 illustrates the theory behind the incorporation of the flow restrictors. By incorporating a restrictor 7 as shown coolant pumped by pump 6 can be made to flow down route R1 at low pressure by restricting flow in route R2 under those conditions.

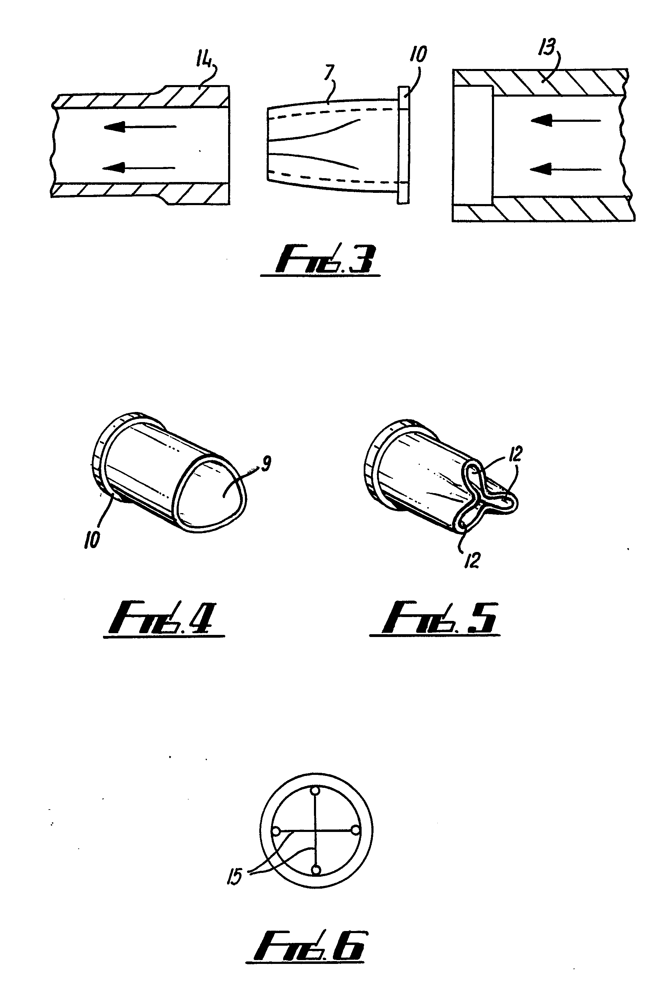

Referring to Figures 4 and 5, each flow restrictor 7, 8 is made from a natural or synthetic material. It is generally cylindrical, defines a central through bore 9, has a flange 10 at one end and has a folded formation at the other. In the example shown, there are three folds 12 although there could be more or less than this as required. Indeed, the response characteristics can be "tuned" to a specific application by careful choice of material and thicknesses and the number of folds incorporated.

The restrictor could also be designed to produce the previously described characteristic in one direction and a pre-determined fixed restriction in the reverse flow direction.

Referring to Figure 3, each restrictor is installed in the appropriate fluid passage with the flange 10 employed as a locating shoulder in a recessed position of one part 13 of a two part connection in the passage. The other part 14 of the connection accommodates the body of the restrictor and traps the flange 10 in position.

Figure 6 shows an alternative to the restrictor of Figures 4 and 5 which has a disc form and defines flaps 15 instead of folds, and has the same flow characteristics in both directions. These flaps can be altered in thickness, number, profile and angle between adjacent cuts to "tune" the restrictor.

Referring again to Figure 1, with the flow restrictors 7 and 8 in position, at low engine speeds and therefore low coolant pressure generated by the water pump 6, the flow restrictors adopt the form shown in Figure 5 to restrict coolant flow therethrough. This in turn increases pressure at the cylinder head outlets and, as a result, extra coolant is directed through the heater which then becomes the less constricted route. As coolant pressure generated by the pump 6 increases with increasing engine speed the fluid pressure differential across each restrictor increases from the supported end flange 10 , the folds 11 open up and the restriction decreases thus reducing the coolant flow bias in favour of the heater and enabling the volume of coolant flow through the cylinder head to increase.

It will be appreciated that the above embodiment has been described by way of example only and that many variations are possible without departing from the invention. For example,the resistrictor can also be used as a crude pressure relief valve that will permit a high flow at high pressure conditions,but will not fully seal at low pressure conditions.

## Claims

1. A flow restrictor made of a flexible material comprising a through passage (9) characterised in that the passage (9) has a cross-sectional area which increases with increasing differential pressure thereacross.

2. A flow restrictor as claimed in claim 1, which is moulded from rubber or a synthetic plastics material.

3. A flow restrictor as claimed in claim 1 or 2, which comprises a hollow cylinder having folds (12) at one end operative to open with increased pressure to permit increased flow therethrough.

4. A flow restrictor as claimed in claim 3, in which there are three folds (12).

5. A flow restrictor as claimed in claim 3 or 4, in which the hollow cylinder has a flange (10) at the other end enabling the flow restrictor to be located in a flow passage.

6. A flow resistrictor as claimed in claim 1 or 2, which comprises a disc having a plurality of flaps (15) operative to open with increased pressure to permit increased flow therethrough.

7. A flow restrictor as claimed in claim 6, in which the thickness, number and profile of the flaps (15) is chosen to tune the restrictor to its desired operation.

8. A coolant system comprising a flow restrictor as claimed in any preceding claim, in which the flow restrictor (7) and (8) is disposed in a coolant path leading away from the cylinder head of the engine and is operative to divert coolant away from the head towards a heat exchanger.

9. A coolant system for an internal combustion engine comprising a plurality of coolant flow paths and a flow restrictor (7) (8) disposed in one of the paths to bias flow towards another of the paths under certain engine operating conditions.

**Fig. 1**

R1

R2

6

7

7

EP 0 368 519 A2

_Fig.2_

Fig.3

Fig.4

Fig.5

Fig.6